# EUROPEAN PATENT APPLICATION

(11) **EP 1 703 704 A2**
(43) Date of publication of application: **20.09.2006**
(21) Application number: 06004818.8
(22) Date of filing: 09.03.2006
(51) Int. Cl.: H04M 1/02

(54) **Sliding swing device for mobile terminal**

(30) Priority: 17.03.2005 KR 2005022063
(71) Applicant: Samsung Electronics Co., Ltd., Suwon-si, Gyeonggi-Do (KR)
(72) Inventor: Jeong, Dong, Yeongtong-gu Suwon-si Gyeonggi-do (KR); Kang, Sung-Ill, Yeongtong-gu Suwon-si Gyeonggi-do (KR)
(74) Representative: Lang, Johannes

(57) **Abstract**

A sliding swing device for a mobile terminal comprised of a main body housing and a sliding swing housing opened and closed in opposition to the main body housing is provided. The sliding swing device includes a base member, a sliding swing member, a guide member, a first force supplier, and a second force supplier. The sliding swing member is combined with the base member in a stacked fashion, slides from an initial position to an end position, and rotates at the initial position. The guide member is slidably combined with the sliding swing member. The first force supplier is provided between the sliding swing member and the guide member and supplies the guide member with force to semi-automatically slide from the initial position to the end position. The second force supplier is arranged under the first force supplier in a stacked fashion and supplies the sliding swing member with force to semi-automatically swing.

## Description

### BACKGROUND OF THE INVENTION

### Field of the Invention

The present invention generally relates to portable digital communication apparatuses, such as cellular phones, Personal Digital Assistants (PDAs), Hand Held Phones (HHPs), MPEG-1 Audio Layer 3 (MP3) phones, game phones, camera phones, Internet phones and combinations thereof. More particularly, the present invention relates to a sliding swing device for a mobile terminal that allows a user to conveniently view displayed information through a semi-automatic sliding/swing operation.

### Description of the Related Art

In general, a "portable communication apparatus" is an electronic apparatus which a user can carry with him or her to perform wireless communication. Since they are portable, the designs of such portable communication apparatuses have tended toward compact, slim, and light designs. Modem designs have also tended towards multimedia availability, and also towards having a wider variety of functions. In particular, future portable communication apparatuses are not only expected to pursue greater multi-functionality and multi-purpose utilization, and greater compactness and lightness, but these apparatuses will also be modified to be suitable for various multimedia environments or Internet environments. Additionally, such portable communication apparatuses are now commonly used by all kinds of people, including men and women, the young and the old throughout the world, and are recognized by some people as a nearly indispensable commodity which should always be carried.

Conventional portable communication apparatuses may be classified according to their appearance. For example, portable communication apparatuses are commonly classified into bar-type wireless terminals, flip-type wireless terminals, and folding-type wireless terminals according to their appearance. The portable communication apparatuses may also be classified as neck wearable type communication apparatuses or wrist wearable type communication apparatuses, according to the position at which the communication apparatus is worn or the way in which a user puts on the communication apparatus. Additionally, the portable communication apparatuses may be classified into rotation-type communication apparatuses and sliding-type communication apparatuses according to the manner of opening and closing the communication apparatuses These various classifications of portable communication apparatuses can be easily understood by those skilled in the art.

Meanwhile, conventional portable communication apparatuses now tend to be capable of transmitting data at high speeds, in addition to the basic function of performing voice communication. In other words, in response to increased demands by consumers, portable communication apparatuses now tend to provide high speed data transmission using wireless communication technology.

Recent portable communication apparatuses also tend to be equipped with a camera lens which enables the communication apparatuses to transmit an image signal. In other words, current conventional portable communication apparatuses may have an embedded or external camera lens or other photographing means that enable a user to visually communicate with another person or take photographs of a subject.

In conventional sliding-type portable communication apparatuses, however, a body housing can only slide in one direction and only has a single display device fixed to the body housing. This makes it inconvenient for a user to take a photograph of a subject. An example of a conventional sliding-type portable communication apparatuses is disclosed in Korean Patent Application No. 2002-71911, filed by the assignee of the present invention, and incorporated herein by reference in its entirety.

Furthermore, it is inconvenient for users to view video or TV through a display device in conventional portable communication apparatuses. This is because the display device for displaying information requires a broader display screen in a TV or video view mode.

Accordingly, there is a need for a portable communication apparatus that slides and swings. There is also a need for a sliding and swinging device for a portable communication apparatus.

### SUMMARY OF THE INVENTION

An aspect of the present invention is to solve at least the above problems and/or disadvantages and to provide at least the advantages described below. Accordingly, an aspect of the present invention is to provide a device with sliding and swinging functions for use in a sliding/swing-type portable communication apparatus.

It is another aspect of the present invention to provide a sliding swing device that is capable of semi-automatically sliding and swinging.

It is still another aspect of the present invention to provide a sliding swing device that is slim and compact.

It is yet another aspect of the present invention to provide a sliding swing device, in which a housing of a mobile terminal can be separated and combined for the mounting of the sliding swing device, thereby improving the assembly process of the mobile terminal and saving assembly time.

It is yet one more aspect of the present invention to provide a sliding swing device which allows users to view a displayed screen (such as a screen in a TV or video view mode) at convenient positions by smoothly sliding and swinging.

To achieve the above and other objects, a sliding swing device for a mobile terminal comprised of a main body housing and a sliding swing housing that is opened and closed in opposition to the main body housing is provided. The sliding swing device includes a base member, a sliding swing member, a guide member, a first force supplier, and a second force supplier. The sliding swing member is combined with the base member in a stacked fashion, slides from an initial position to an end position, and rotates at the initial position. The guide member is slidably combined with the sliding swing member. The first force supplier is provided between the sliding swing member and the guide member and supplies the guide member with force to semi-automatically slide the sliding swing housing from the initial position to the end position. The second force supplier is arranged under the first force supplier in a stacked fashion and supplies the sliding swing member with force to semi-automatically swing the sliding swing housing.

To achieve the above and other objects, a mechanism for a sliding swing device for a mobile terminal that has a main body housing and a sliding swing housing that is opened and closed in opposition to the main body housing is also provided. The mechanism includes the sliding swing device, a first member, and a second member. The sliding swing device includes a base member, a sliding swing member, a guide member, a first force supplier, and a second force supplier. The sliding swing member is combined with the base member in a stacked fashion, slides from an initial position to an end position, and rotates at the initial position. The guide member is slidably combined with the sliding swing member. The first force supplier is provided between the sliding swing member and the guide member and supplies the guide member with force to semi-automatically slide the sliding swing housing from the initial position to the end position. The second force supplier is arranged under the first force supplier in a stacked fashion and supplies the sliding swing member with force to semi-automatically swing the sliding swing housing. The first member accommodates the sliding swing device in parallel with the longitudinal direction of the first member. The second member combines the sliding swing device with the first member in parallel with the first member.

### BRIEF DESCRIPTION OF THE DRAWINGS

The above and other objects, features, and advantages of certain embodiments of the present invention will be more apparent from the following description taken in conjunction with the accompanying drawings, in which:
FIG. 1 is an exploded perspective view of a sliding swing device according to an embodiment of the present invention;
FIG. 2 is an enlarged exploded perspective view of the area indicated with an A in FIG. 1;
FIG. 3 is an exploded perspective view of a sliding swing member of a sliding swing device according to an embodiment of the present invention;
FIG. 4 is an exploded perspective view of a base member of a sliding swing member of a sliding swing device according to an embodiment of the present invention;
FIG. 5 is a perspective view illustrating an initial position of a sliding swing housing of a sliding swing device according to an embodiment of the present invention;
FIG. 6 is a perspective view illustrating a state before a sliding swing device according to an embodiment of the present invention slides from its initial position;
FIG. 7 is a side-sectional view illustrating a state before a sliding swing device according to an embodiment of the present invention slides from its initial position;
FIG. 8 is an enlarged side-sectional view of the area indicated with a B in FIG. 7;
FIG. 9 is a perspective view illustrating an end position of a sliding swing housing of a sliding swing device according to an embodiment of the present invention;
FIG. 10 is a perspective view illustrating a state after a sliding swing device according to an embodiment of the present invention slides to its end position;
FIG. 11 is a perspective view of FIG. 9 cut along a longitudinal direction of a mobile terminal;
FIG. 12 is a perspective view illustrating a state after a sliding swing housing of a sliding swing device according to an embodiment of the present invention swings from its initial position;
FIG. 13 is a partial sectional perspective view illustrating a state after a sliding swing device according to an embodiment of the present invention swings from its initial position;
FIG. 14 is a partial sectional plan view illustrating a state after a sliding swing device according to an embodiment of the present invention swings from its initial position;
FIG. 15 is a plan view illustrating a state before a sliding swing device according to an embodiment of the present invention swings from its initial position;
FIG. 16 is a plan view for explaining swing of a sliding swing device according to an embodiment of the present invention from its initial position; and
FIG. 17 is a plan view illustrating a state after a sliding swing device according to an embodiment of the present invention swings from its initial position.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

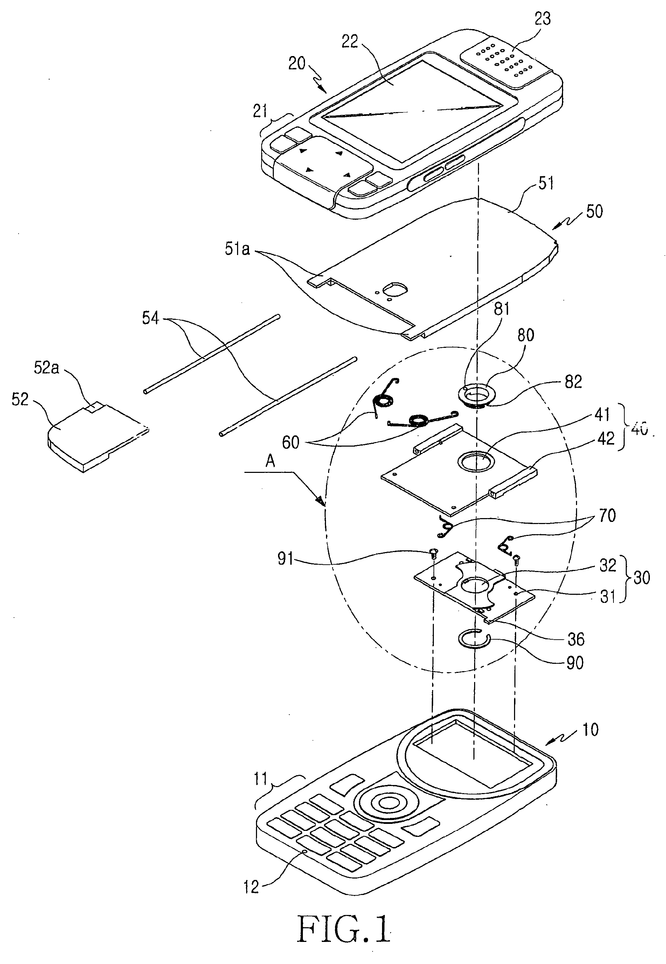

Referring to FIGS. 1, 2, and 5, a sliding swing device for a mobile terminal includes a base member 30, a sliding swing member 40, a guide member 50, a first force supplier 60, and a second force supplier 70. The base member 30 is combined with the sliding swing member 40 in a stacked fashion and is fixedly engaged with a main body housing 10. The sliding swing member 40 is combined with the base member 30 in a stacked fashion such that a sliding swing housing 20 slides from an initial position to an end position and rotates at the initial position.

The guide member 50 is fixedly engaged with the sliding housing 30 to be slidably combined with the sliding swing member 40. The first force supplier 60 is provided between the sliding swing member 40 and the guide member 50 to supply the guide member 50 with force to semi-automatically slide from the initial position to the end position. The second force supplier 70 is arranged under the first force supplier 60 in a stacked fashion to supply force to semi-automatically swing the sliding swing member 40.

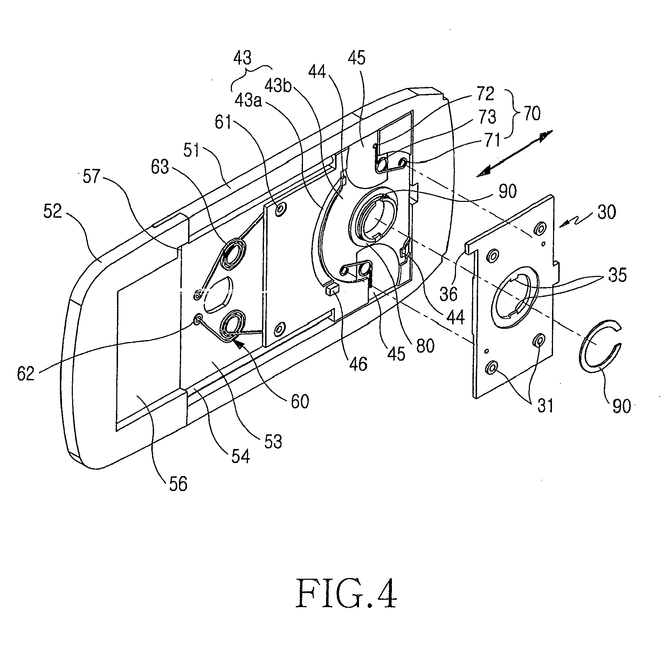

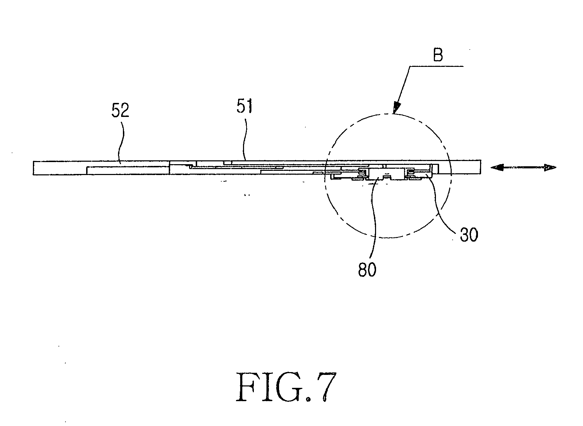

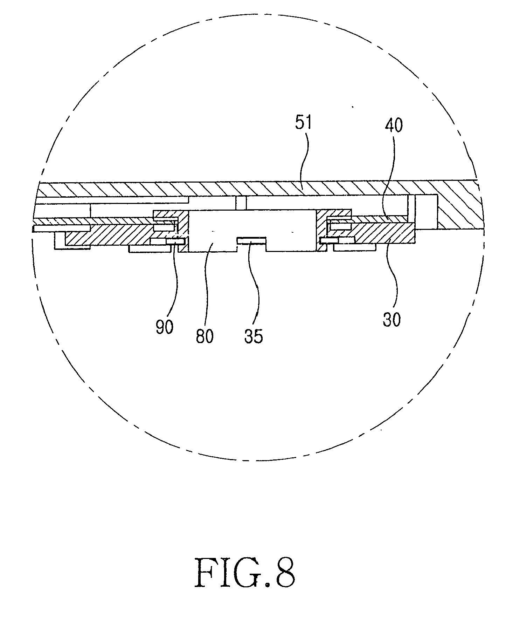

Referring to FIGS. 4, 7, and 8, a swing shaft 80 is provided to combine the base member 30 and the sliding swing member 40 in a stacked fashion and allows rotation of the sliding swing member 40. A snap ring 90 is engaged with an end of the swing shaft 80.

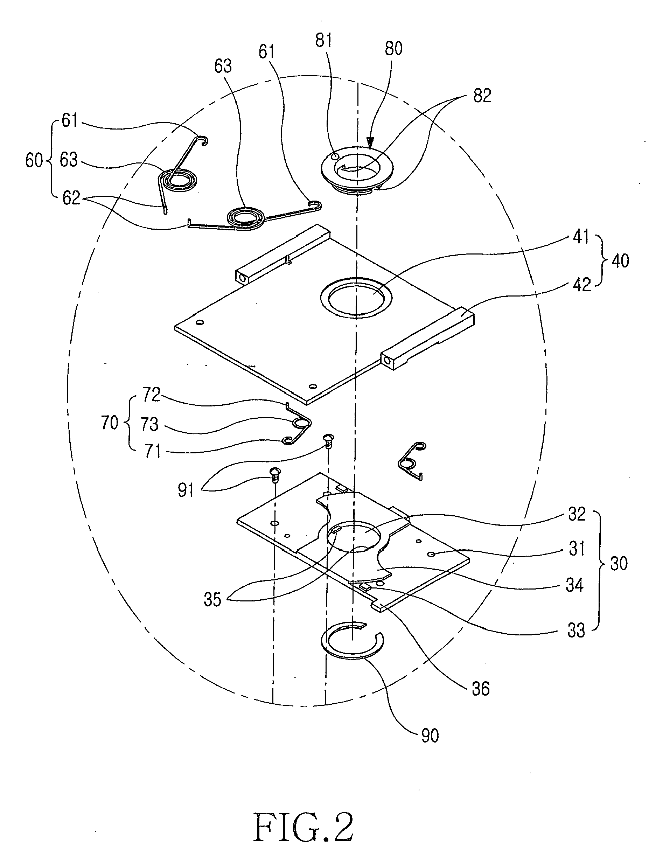

Referring to FIGS. 1 and 2, at least one fastener engaging unit 31 is formed in the base member 30 so that the base member 30 can be fixed to the main body housing 10. A base side through hole 32 is formed in the center of the base member 30 to allow the swing shaft 80 to penetrate the base member 30. A first guide unit 33 and a second guide unit 34 are formed around the outer circumference of the base side through hole 32. The first and second guide units 33 and 34 are combined with a guide unit 43 (FIG. 4) of the sliding swing member 40 to guide rotation of the sliding swing member 40. A pair of fixing units 35 are formed in the inner circumference of the base side through hole 32 to be fixedly combined with a pair of fixing grooves 82 of the swing shaft 80. The second guide unit 34 is symmetrical with respect to the base side through hole 32. The outer periphery of the second guide unit 34 is curved.

Referring to FIGS. 1-4, the sliding swing member 40 includes a member side through hole 41, a combining unit 42, and at least one guide unit 43. The member side through hole 41 is formed in the center of the sliding swing member 40 to be combined, preferably threadably, with the swing shaft 80. The combining unit 42 is combined with a guide rod 54 included in the guide member 50 and is formed at both sides of the sliding swing member 40 for sliding of the guide member 50. The guide unit 43 is formed on the back side of the sliding swing member 40 to guide rotation of the sliding swing member 40. The guide unit 43 includes a first guide groove 43a that is engaged with the first guide unit 33 to guide rotation of the sliding swing member 40 and a second guide groove 43b that is engaged with the second guide unit 34 of the base member 30 to guide rotation of the sliding swing member 40.

The first guide groove 43a and the second guide groove 43b are curved lines.

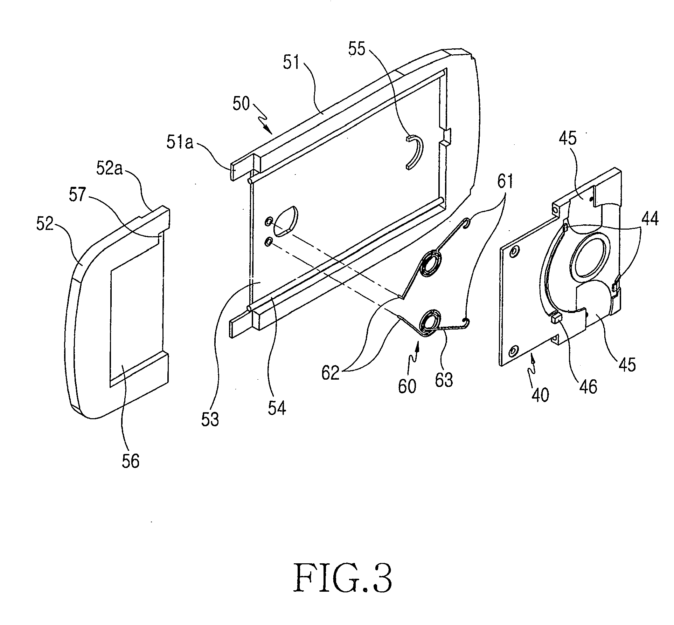

Referring to FIG. 3, the guide member 50 includes a first member 51 and a second member 52 that form a movement space 53 that extends in a longitudinal direction. The second member 52 (that is, the end of the movement space 53) can be separated and combined in the longitudinal direction to facilitate assembly of the sliding swing member 40. The movement space 53 is defined within the sliding swing housing. The movement space 53 is formed in the longitudinal direction in the guide member 50 to accommodate the sliding swing device and allow sliding of the sliding swing device. The pair of guide rods 54 is provided in the movement space 53 to be combined, preferably threadably, with the combining unit 42 of the sliding swing member 40. In addition, a guide rotating unit 55 is formed in the movement space 53 to guide rotation of the sliding swing member 40. The guide rotating unit 55 is a semi-circular arc.

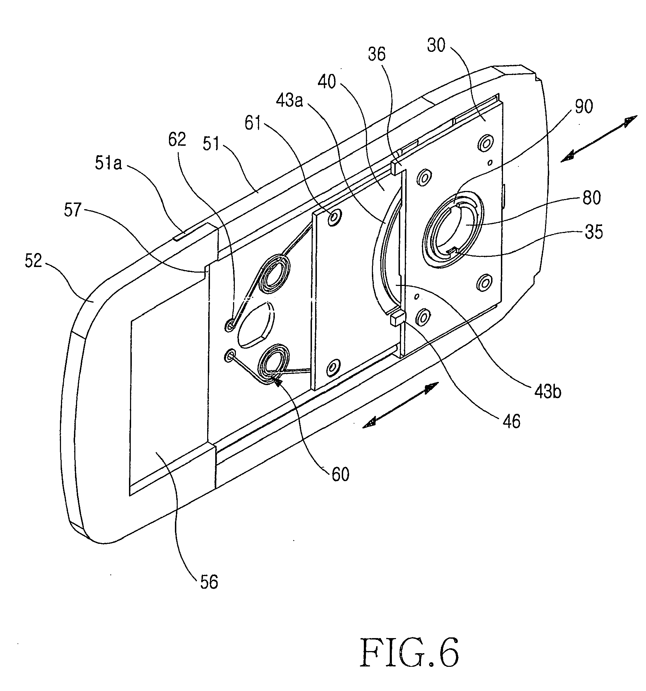

Referring to FIGS. 4, 6, and 11, each of the first force supplier 60 and the second force supplier 70 is formed of at least one first and second spring. One end of the first spring provides a fixing end 61 to be fixed to the sliding swing member 40. The other end of the first spring provides a free end 62 to be combined with the guide member 50 and to be guided within the movement space 53 of the guide member 50. A torsion spring 63 is provided in the center of the first spring to produce tension for sliding the guide member 50 by rotating along a predetermined locus.

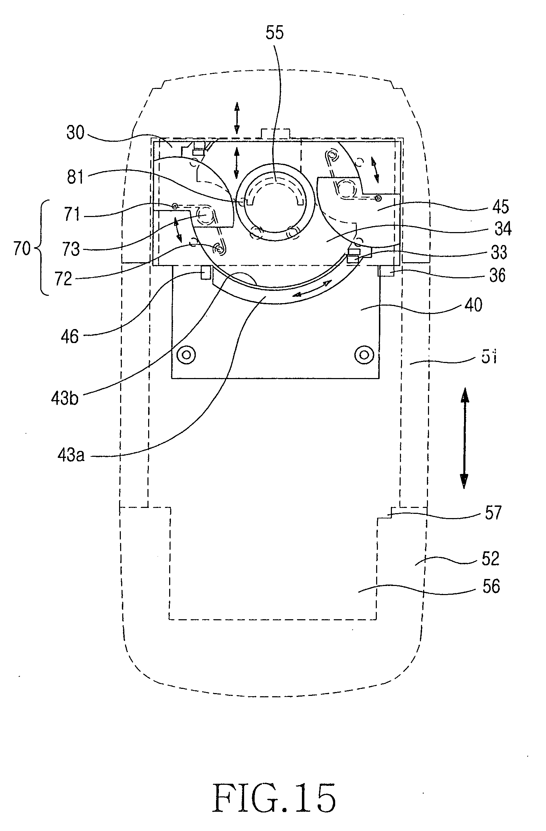

Referring to FIGS. 15, 16, and 17, one end of the second spring provides a fixing end 71 to be fixed to the base member 30. The other end of the second spring provides a free end 72 to be combined with the sliding swing member 40 and to be guided through rotation of the sliding swing member 40. A torsion spring 73 is provided in the center of the second spring to produce tension for rotating the sliding swing member 40 by rotating along a predetermined locus.

Referring to FIGS. 3 and 4, at least one spring stopper member 44 is formed in the sliding swing member 40 to stop rotation of the second spring. Further, at least one spring guide groove 45 is formed in the sliding swing member 40 to guide rotation of the torsion spring 73 along a predetermined locus.

Referring to FIG. 15, the guide member 50 includes a first stopping unit 56 that is combined with the sliding swing member 40 to restrict sliding of the sliding swing member 40. The first stopping unit 56 includes a combining and separating groove to be combined with and separated from an end of the sliding swing member 40. The first stopping unit 56 further includes a rotation stopper 57 that is combined with a protrusion 36 formed in the base member 30 to prevent the sliding swing unit 40 from rotating after sliding.

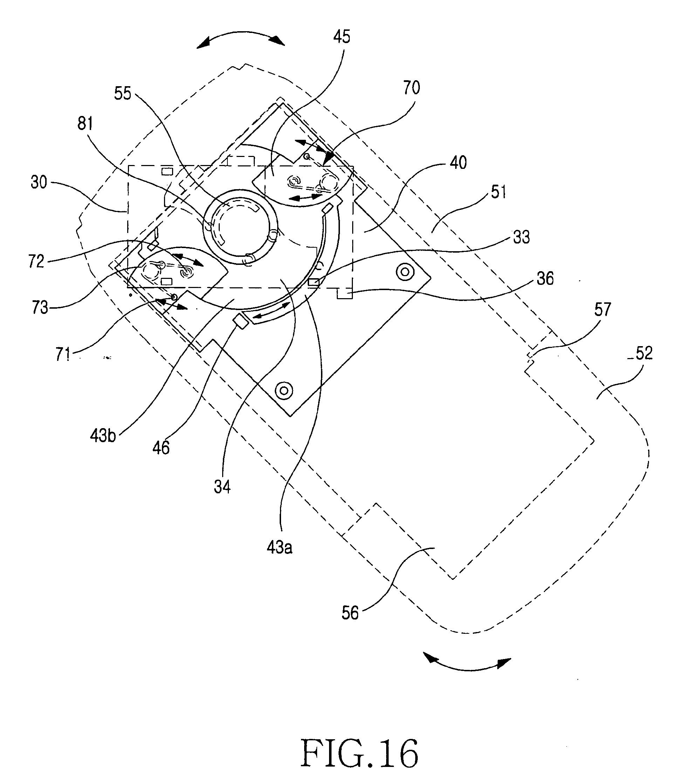

Referring to FIG. 16, the sliding swing member 40 includes a second stopping unit 46 that rotates with the rotation of the sliding swing member 40 and restricts rotation of the sliding swing member 40 by contacting the base member 30. The second stopping unit 46 includes a locking protrusion that locks the sliding swing member 40 by contacting the base member 30.

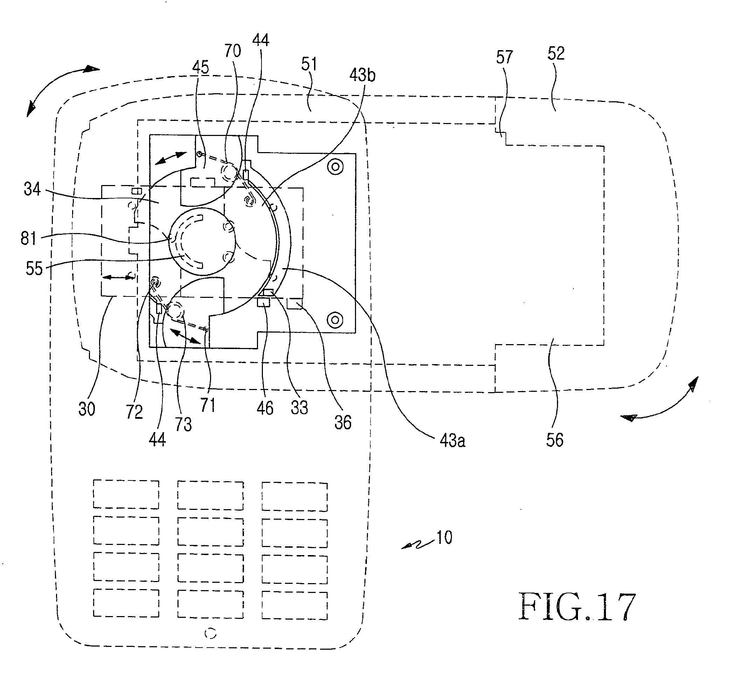

Referring to FIG. 17, a third stopping unit 81 is included in the swing shaft 80 and the guide member 50 to stop the sliding swing member 40 at the initial position of the sliding swing member 40. Once the sliding swing member 40 rotates from its initial position, the third stopping unit 81 rotates along the semi-circular arc of the guide rotating unit 55 and locks the guide rotating unit 55.

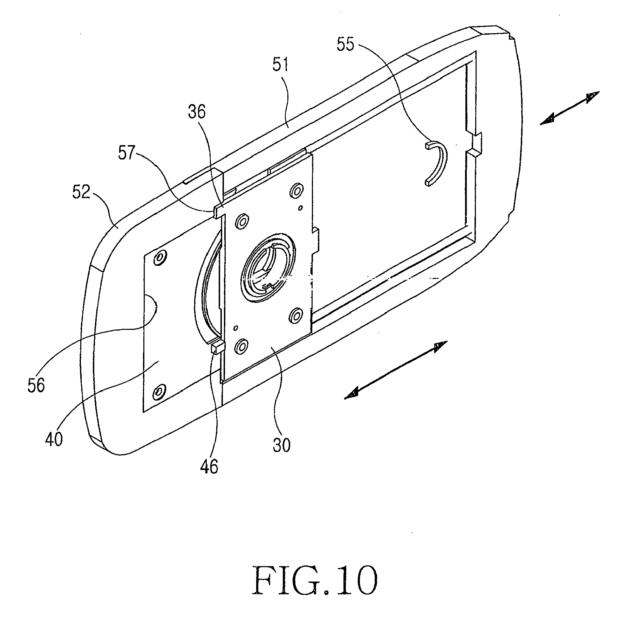

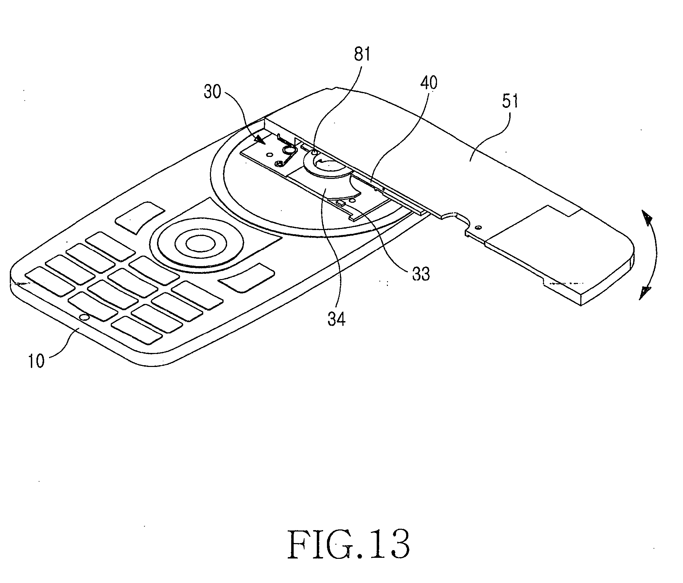

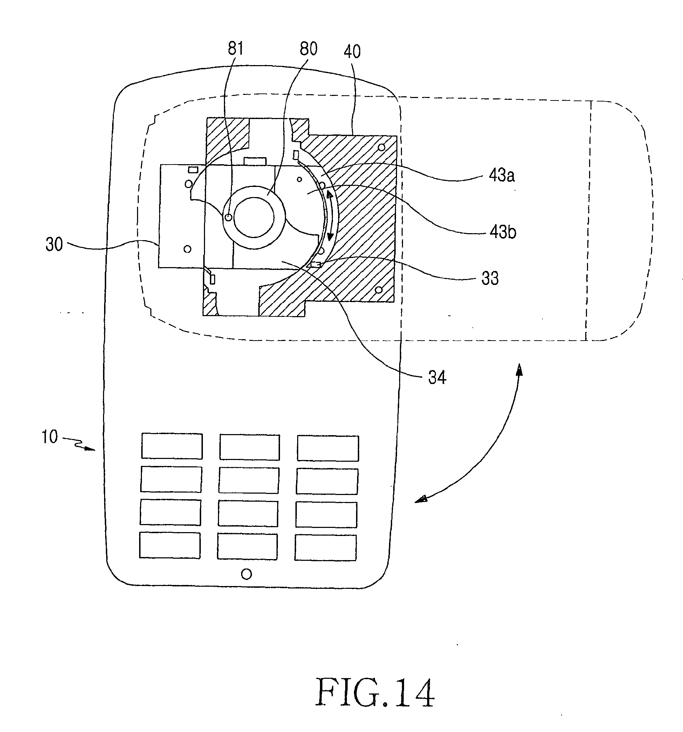

The operation of a sliding swing device for a mobile terminal according to an embodiment of the present invention will now be described in more detail with reference to FIGS. 1 through 17.

Referring to FIGS. 1 and 2, in the sliding swing device for the mobile terminal, the sliding swing member 40 is placed on the base member 30 in a stacked fashion. The guide member 50 is combined with the sliding swing member 40. The swing shaft 80 penetrates the base member 30 and the sliding swing member 40 so that is can slide from the initial position to the end position with the sliding of the sliding swing member 40 and rotate at the initial position.

Referring to FIG. 2, once the swing shaft 80 penetrates the base side through hole 32 of the base member 30 and the member side through hole 41 of the sliding swing member 40 to combine the base member 30 and the sliding swing member 40 in a stacked fashion, the snap ring 90 is engaged with a protruded end of the swing shaft 80.

Referring to FIGS. 3 and 4, the first force supplier 60 is provided between the sliding swing member 40 and the guide member 50 to supply the guide member 50 with force to semi-automatically slide from the initial position to the end position. The second force supplier 70 is arranged under the first force supplier 60 in a stacked fashion to supply the sliding swing member 40 with force to semi-automatically swing from the initial position.

Since the pair of fixing units 35 is formed in the inner circumference of the base side through hole 32 to be fixedly combined with the pair of fixing grooves 82 of the swing shaft 80, the base member 30 is combined with the swing shaft 80 and the pair of fixing units 35 is fixedly combined with the pair of fixing grooves 82.

In this state, at least one screw 91 is fixedly engaged with the main body housing 10 using at least one screw engaging unit 31 formed in the base member 30.

The main body housing 10 includes a keypad 11 comprised of a plurality of keys and a microphone device 12.

The sliding swing member 40 is accommodated by the guide member 50 that extends in the longitudinal direction. The movement space 53 is provided in the guide member 50 to accommodate the sliding swing member 40.

The guide member 50 includes a first member 51 and a second member 52 that can separated from each other to accommodate the sliding swing member 40. Preferably, the sliding swing member 40 slides substantially parallel to the longitudinal axis of the first and second members 51 and 52. The second member 52 is combined with an end of the first member 51.

A combining and separating unit 51 a is formed on an end of the first member 51 to be combined with and separated from a combining groove 52a formed in the second member 52. The combining and separating unit is inserted into the combining groove 52a to be fixedly combined with the combining groove 52a.

A pair of guide rods 54 are provided in the movement space 53. The guide rods 54 are inserted into the combining unit 42 to allow the guide member 50 to slide.

The first force supplier 60 includes a first spring. The fixing end 61 of the first spring is fixed to the sliding swing member 40 and the free end. 62 of the first spring is combined with the guide member 50. The torsion spring 63 in the center of the first spring produces tension for sliding the guide member 50 by rotating along a predetermined locus.

The sliding swing housing 20 includes a plurality of keys 21, a large-screen display device 22, and a speaker device 23.

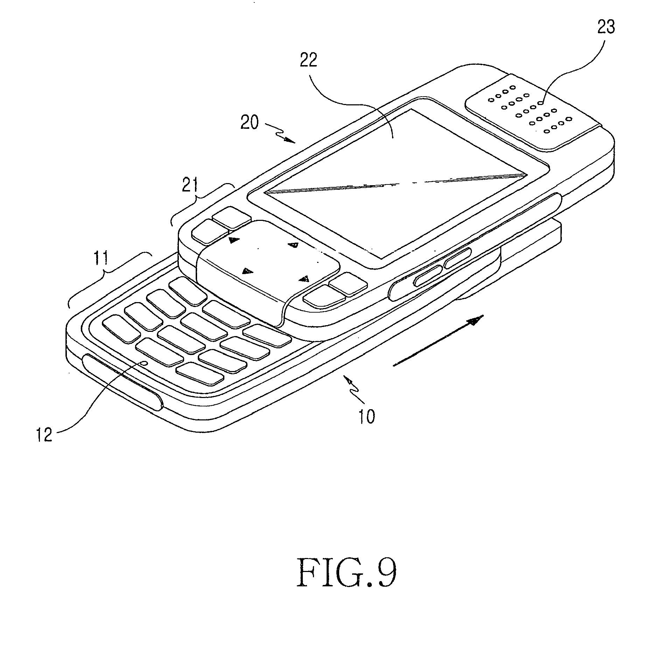

Referring to FIGS. 9, 10, and 11, when the sliding swing housing 20 slides from the initial position to the end position (that is, in a direction away from the main body housing 10), the guide member 50 also slides with sliding of the sliding swing housing 20.

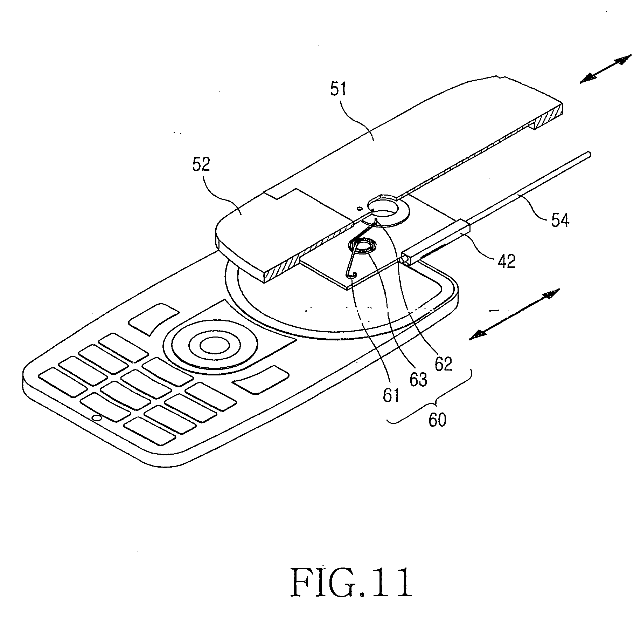

At this time, as shown in FIG. 11, the guide rod 54 of the guide member 50 also moves and is guided by the combining unit 42 of the sliding swing member 40.

The guide member 50 provides the first stopping unit 56, and the first stopping unit 56 also moves with movement of the guide member 50. An end of the sliding swing member 40 is combined with the combining and separating groove of the first stopping unit 56. The first stopping unit 56 stops the sliding of the guide member 40 at the end position. At this position, the rotation stopper 57 is combined with the protrusion 36 formed in the base member 30 and prevents the sliding swing unit 40 from rotating. That is, the guide member 50 moves to the end position and is combined with the protrusion 36 to prevent rotation of the sliding swing member 40 at the end position, thereby fixing the sliding swing member 40. Referring to FIG. 11, the free end 62 of the first spring moves with movement of the guide member 50. At this time, the guide member 50 slides to the end position through rotation of the torsion spring 63 of the first spring along a predetermined locus.

Tension produced by the torsion spring 63 allows semi-automatic sliding of the guide member 50 to the end position, along with semi-automatic sliding of the sliding swing housing 20.

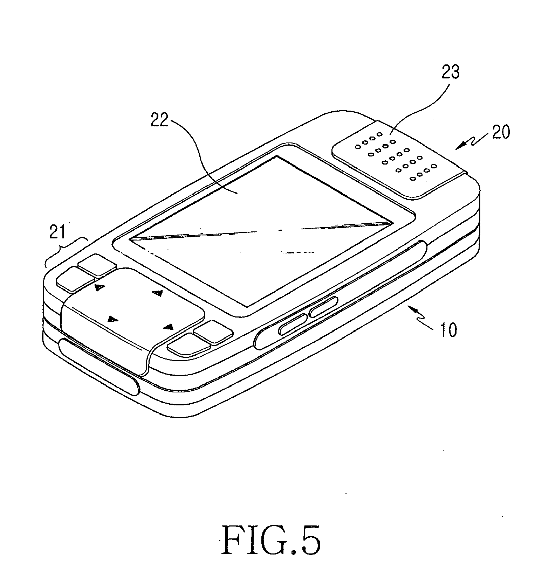

At this time, as shown in FIGS. 5 through 8, if the sliding swing housing 20 is slid towards the main body housing 10, the guide member 50 slides to the initial position, and the sliding swing housing 20 returns to its original position.

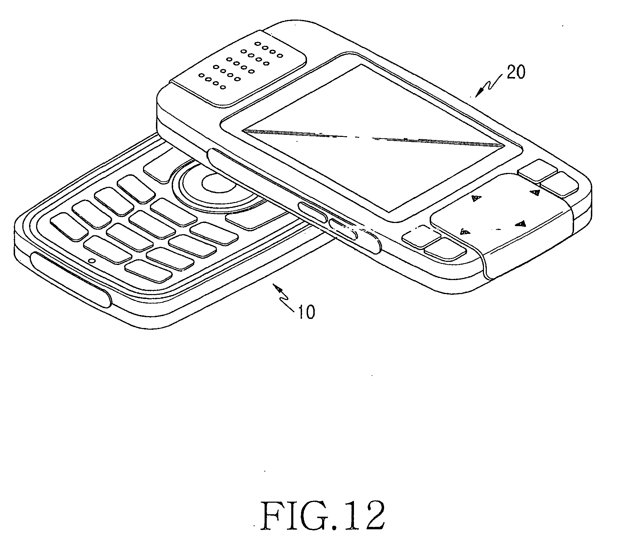

In this state, as shown in FIGS. 12 through 14, the sliding swing housing 20 can rotate with respect to the main body housing 10 from its initial position, and ,therefore, the guide member 50 and the sliding swing member 40 can also rotate.

At this time, as shown in FIGS. 15 and 16, the sliding swing member 40 semi-automatically rotates through the second force supplier 70. The second force supplier 70 includes the second spring. The fixing end 71 of the second spring is fixed to the base member 30 and the free end 72 of the second spring is combined with the sliding swing member 40.

As shown in FIGS. 16 and 17, the torsion spring 73 produces tension for rotating the sliding swing member 40 by rotating along a predetermined locus. Thus, the tension produced by the torsion spring 73 allows semi-automatically swinging the sliding swing member 40 from the initial position.

As shown in FIG. 17 since the sliding swing member 40 includes the at least one spring stopper member 44 to stop rotation of the second spring, the second spring rotates and stops rotating by contacting the spring stopper member 44 after rotating along a predetermined locus.

Since the at least one spring guide groove 45 is formed in the sliding swing member 40 to guide rotation of the torsion spring 73 along a predetermined locus, the torsion spring 73 is guided along the spring guide groove 45 during rotation.

At this time, as shown in FIG 17, since the sliding swing member 40 includes the first guide groove 43a that is engaged with the first guide unit 33 to guide rotation of the sliding swing member 40 and the second guide groove 43b that is engaged with the second guide unit 34 of the base member 30 to guide rotation of the sliding swing member 40, the sliding swing member 40 rotates and the first guide groove 43a and the second guide groove 43b are guided by the first guide unit 33 and the second guide unit 34, respectively.

As shown in FIGS. 16 and 17, the sliding swing member 40 includes the second stopping unit 46 that rotates with rotation of the sliding swing member 40 and restricts rotation of the sliding swing member 40 by contacting the base member 30.

The second stopping unit 46 includes the locking protrusion that rotates with rotation of the sliding swing member 40 and then stops rotation of the sliding swing member 40 by contacting the base member 30.

At this time, as shown in FIGS. 16 and 17, the third stopping unit 81 is included in the swing shaft 80 and the guide member 50. Once the sliding swing member 40 rotates from its initial position along the guide rotating unit 55 of the guide member 50, the third stopping unit 81 rotates along the semi-circular arc of the guide rotating unit 55 and locks the guide rotating unit 55.

The third stopping unit 81 locks the sliding swing housing 20 that is rotated.

At this time, the sliding swing housing 20 rotates again from its initial position, and the guide member 50 and the sliding swing member 40 also rotate in a reverse direction.

As described above, semi-automatic sliding and swinging facilitates opening and closing of a mobile terminal in a sliding and swinging manner, In addition, since members of the mobile terminal can be separated from and combined with one another, it is possible to improve the assembly process for the mobile terminal and reduce the assembly time.

While the invention has been shown and described with reference to certain embodiments thereof, it will be understood by those skilled in the art that various changes in form and details may be made therein without departing from the spirit and scope of the invention as defined by the appended claims.

## Claims

1. A sliding swing device for a mobile terminal comprised of a main body housing and a sliding swing housing that is opened and closed with respect to the main body housing, the sliding swing device comprising:
a base member;
a sliding swing member which is combined with the base member in a stacked fashion, which slides from an initial position to an end position, and which rotates at the initial position;
a guide member which is slidably combined with the sliding swing member;
a first force supplier which is provided between the sliding swing member and the guide member and supplies the guide member with force to semi-automatically slide the sliding swing member from the initial position to the end position; and
a second force supplier which is arranged under the first force supplier in a stacked fashion and supplies the sliding swing member with force to semi-automatically swing the sliding swing member.

2. The sliding swing device of claim 1, wherein
a swing shaft penetrates the base member and the sliding swing member to combine them in a stacked fashion, slides with the sliding of the sliding swing member, and allows rotation of the sliding swing member.

3. The sliding swing device of claim 2, wherein
a snap ring is engaged with a protruded end of the swing shaft.

4. The sliding swing device of claim 2, wherein
at least one fastener engaging unit is formed in the base member to be fixedly engaged with the main body housing,
a base side through hole is formed in the center of the base member to allow the swing shaft to penetrate the base member,
a first guide unit and a second guide unit are formed in the outer circumference of the base side through hole, and
a pair of fixing units are formed in the inner circumference of the base side through hole to be fixedly combined with a pair of fixing grooves of the swing shaft.

5. The sliding swing device of claim 4, wherein
the second guide unit is symmetrical with respect to the base side through hole and is curved.

6. The sliding swing device of claim 2, wherein the sliding swing member comprises:
a member side through hole that is formed in the center of the sliding swing member and is threadably combined with the swing shaft;
a combining unit that is formed at both sides of the sliding swing member, is combined with a pair of guide rods included in the guide member, and
allows the guide member to slide; and
at least one guide unit that guides rotation of the sliding swing member.

7. The sliding swing device of claim 6, wherein the guide unit comprises:
a first guide groove that is combined with the first guide unit of the base member to guide rotation of the sliding swing member; and
a second guide groove that is combined with the second guide unit of the base member to guide rotation of the sliding swing member.

8. The sliding swing device of claim 7, wherein
the first guide groove and the second guide groove are curved lines.

9. The sliding swing device of claim 1, wherein
the guide member defines a movement space that extends in a longitudinal direction, the movement space accommodating the sliding swing member, the guide member having an end that can be separated and combined,
a pair of guide rods are formed in the movement space to be combined with a combining unit formed on the sliding swing member, and
a guide rotating unit is formed in the movement space to guide rotation of the sliding swing member.

10. The sliding swing device of claim 9, wherein
the guide rotating unit is a semi-circular arc.

11. The sliding swing device of claim 1, wherein
the first force supplier comprises at least one first spring.

12. The sliding swing device of claim 11, wherein
one end of the first spring provides a fixing end that is fixed to the sliding swing member,
the other end of the first spring provides a free end that is combined with the guide member and is guided within a movement space defined by the guide member, and
a torsion spring is formed in the center of the first spring to produce tension for sliding the guide member by rotating along a predetermined locus.

13. The sliding swing device of claim 1, wherein
the second force supplier comprises at least one second spring.

14. The sliding swing device of claim 13, wherein
one end of the second spring provides a fixing end that is fixed to the base member,
the other end of the second spring provides a free end that is combined with the sliding swing member and is guided through rotation of the sliding swing member, and
a torsion spring is formed in the center of the second spring to produce tension for rotating the guide member by rotating along a predetermined locus.

15. The sliding swing device of claim 14, wherein
at least one spring guide groove is formed in the sliding swing member to guide rotation of the torsion spring along a predetermined locus.

16. The sliding swing device of claim 13, wherein
at least one spring stopper member is formed in the sliding swing member to stop rotation of the second spring.

17. The sliding swing device of claim 1, wherein the guide member comprises:
a first stopping unit that is combined with the sliding swing member to restrict sliding of the sliding swing member.

18. The sliding swing device of claim 17, wherein the first stopping unit comprises:
a combining and separating groove that is combined with and separated from an end of the sliding swing member; and
a rotation stopping unit that is combined with a protrusion formed in the base member to prevent the sliding swing housing from rotating after sliding.

19. The sliding swing device of claim 1, wherein the sliding swing member comprises:
a second stopping unit that rotates with rotation of the sliding swing member and restricts rotation of the sliding swing member by contacting the base member.

20. The sliding swing device of claim 19, wherein the second stopping unit comprises:
a locking protrusion that locks the sliding swing member by contacting the base member.

21. The sliding swing device of claim 1, wherein
a swing shaft penetrates the base member and the sliding swing member to combine them in a stacked fashion,
the sliding swing housing defines a movement space to accommodate the sliding swing member,
a semi-circular arc-shaped guide rotating unit is formed in the movement space to guide rotation of the sliding swing member, and
a third stopping unit is included in the swing shaft and the guide member.

22. The sliding swing device of claim 21, wherein the third stopping unit comprises:
a stopper member that rotates along the semi-circular arc of the guide rotating unit upon rotation of the sliding swing member at the initial position and locks the guide rotating unit.

23. A mechanism of a sliding swing device for a mobile terminal comprised of a main body housing and a sliding swing housing opened and closed in opposition to the main body housing, the mechanism comprising:
a sliding swing device that comprises:
a base member;
a sliding swing member which is combined with the base member in a stacked fashion, slides from an initial position to an end position, and rotates at the initial position;
a guide member which is slidably combined with the sliding swing member;
a first force supplier which is provided between the sliding swing member and the guide member and supplies the guide member with a force to semi-automatic slide the sliding swing member from the initial position to the end position; and
a second force supplier which is arranged under the first force supplier in a stacked fashion and supplies the sliding swing member with a force to semi-automatically swing the sliding swing member;
a first member that accommodates the sliding swing device, the sliding swing device being substantially parallel to the longitudinal axis of the first member; and
a second member that combines the sliding swing device with the first member.

24. The mechanism of claim 23, wherein
a combining and separating unit is formed at an end of the first member.

25. The mechanism of claim 24, wherein
a protrusion is formed in the second member to combine with and separate from the combining and separating unit of the first member.

26. A sliding swing device for a mobile terminal comprised of a main body housing and a sliding swing housing opened and closed in opposition to the main body housing, the sliding swing device comprising:
a sliding swing module that provides force to allow the sliding swing housing to semi-automatically slide from an initial position to an end position and a force unit to allow the sliding swing housing to semi-automatically rotate at the initial position.
